# EUROPÄISCHE PATENTSCHRIFT

(11) **EP 2 591 897 B1**
(45) Veröffentlichungstag und Bekanntmachung des Hinweises auf die Patenterteilung: **30.04.2014**
(21) Anmeldenummer: 11008991.9
(22) Anmeldetag: 11.11.2011
(51) Int. Cl.: B26D 7/24, F16P 3/14, G01V 8/10

(54) **Schneidmaschine zum Schneiden von gestapelten, blattförmigem Gut mit Lichtschranke**
Cutting machine for cutting stacked, sheet-shaped goods with light barrier
Machine de découpage pour découper des produits empilés en forme de feuilles à l'aide d'une barrière lumineuse

(43) Veröffentlichungstag der Anmeldung: 15.05.2013
(73) Patentinhaber: Adolf Mohr Maschinenfabrik GmbH & Co. KG, 65719 Hofheim am Taunus (DE)
(72) Erfinder: Beck, Christoph, 61462 Königstein (DE)
(74) Vertreter: Quermann, Helmut

(56) Entgegenhaltungen:
- EP-A2- 1 515 078
- DE-C1- 19 852 170
- GB-A- 1 094 175

## Beschreibung

Die Erfindung betrifft eine Schneidmaschine zum Schneiden von gestapeltem, blattförmigem Gut, mit einem Tisch zur Aufnahme des Guts, einem oberhalb des Tischs angeordneten Portalrahmen, einem im Portalrahmen gelagerten, mittels eines Antriebs heb- und senkbaren Schneidmesser, wobei zwischen dem Tisch und dem Portalrahmen im Bereich des Schneidmessers eine Öffnung für das Gut gebildet ist, wobei ferner beidseitig der Öffnung Lichtschrankengehäuse zur Aufnahme mindestens einer Lichtschranke angeordnet sind, und die Lichtschrankengehäuse mit dem Portalrahmen verbunden sind, wobei in mindestens einem Lichtschrankengehäuse Mittel zum Unterbrechen eines Lichtstrahls in der Lichtschranke gelagert sind.

Eine Schneidmaschine zum Schneiden von gestapeltem, blattförmigem Gut, die als Planschneidemaschine ausgebildet ist, ist aus der DE 198 52 170 C1 bekannt. Bei dieser ist oberhalb des Tisches ein Portalrahmen angeordnet. Die Tischoberfläche des Tisches, der horizontal angeordnet ist, erstreckt sich vorne und hinten über den Portalrahmen und bildet somit einen dem Bediener der Schneidmaschine zugewandten Vordertisch und einen dem Bediener abgewandten Hintertisch. Der Hintertisch dient der Aufnahme des zu schneidenden Gutes, der vordere Tisch der Aufnahme des geschnittenen Gutes. Im Portalrahmen ist ein mittels eines Antriebs heb- und senkbares Schneidmesser gelagert. Zwischen dem Tisch und dem Pressbalken ist im Bereich des Schneidmessers eine Öffnung für das Gut gebildet. Das Schneidmesser ist in dessen oberer Endstellung oberhalb der Öffnung angeordnet und es ist neben dem Schneidmesser ein Pressbalken zum Fixieren des Guts beim Schnitt angeordnet. Mittels eines Antriebs ist der Pressbalken senk- und hebbar. Beidseitig der Öffnung sind Lichtschrankengehäuse mit dem Portalrahmen verbunden. Die Lichtschrankengehäuse dienen der Aufnahme mindestens einer Lichtschranke. Die Lichtschranke weist eine Lichtstrahlenquelle bzw. Lichtsignalquelle, auch als Sender bezeichnet und einen Sensor, auch als Empfänger bezeichnet, auf.

Die mindestens eine Lichtschranke dient der Absicherung des vorderen Bereiches der Schneidmaschine, sodass dann, wenn der Bediener in den Bereich der Lichtschranke eingreift, das Messer und der Pressbalken nicht in Gang gesetzt werden können. Üblicherweise sind zur Absicherung des vorderen Bereiches der Schneidmaschine eine Vielzahl von Lichtschranken vorgesehen, um so einen möglichst großen Bereich vor dem Messer besser abzusichern. Die Lichtstrahlen der Lichtschranken sind hierbei im Wesentlichen parallel zueinander und parallel zur Schneidebene des Messers angeordnet.

Aus der Praxis ist eine Schneidmaschine mit den Merkmalen des Oberbegriffs des Anspruchs 1 bekannt, die diese Schneidmaschine dahingehend weiterbildet, dass in mindestens einem Lichtschrankengehäuse Mittel zum Unterbrechen des Lichtstrahls der Lichtschranke gelagert sind. Dieses Unterbrechen des Lichtstrahls der Lichtschranke ist, unabhängig von der eigentlichen Funktion des Absicherns des Bedieners der Schneidmaschine, dann von Bedeutung, wenn Wartungsarbeiten an der Maschine durchzuführen sind und durch Unterbrechen des Lichtstrahls der Lichtschranke die Schneidmaschine insgesamt, zumindest der Antrieb für das Schneidmesser und auch der Antrieb für den Pressbalken stillgesetzt wird.

Insofern ist aus der Praxis eine Schneidmaschine bekannt, die gemäß den Merkmalen der eingangs genannten Art ausgebildet ist. Bei dieser Schneidmaschine sind die Mittel zum Unterbrechen des Lichtstrahls der Lichtschranke als im Lichtschrankengehäuse verschieblich gelagerte Platte ausgebildet, die in den Lichtstrahl der Lichtschranke verschoben werden kann und damit diesen unterbricht. Verschoben wird die Platte durch ein im Lichtschrankengehäuse schwenkbar gelagertes Stellteil, das außerhalb des Lichtschrankengehäuses auf der dem anderen Lichtschrankengehäuse abgewandten Seite schwenkbar gelagert ist und über eine Mechanik mit der Platte zusammenwirkt. Dieses Stellteil ist plattenförmig ausgebildet und in der Ausgangsstellung, wenn die Platte den Lichtstrahl der Lichtschranke nicht unterbricht, im Wesentlichen horizontal orientiert. Zum Unterbrechen des Lichtstrahls wir dieses Stellteil nach oben geschwenkt, wobei es in dieser Stellung einen Arbeitsbereich am Portalrahmen freigibt. Dort befindet sich beispielsweise der Antrieb der Schneidmaschine, insbesondere der Antrieb für das Schneidmesser. Bei Wartungsarbeiten im Bereich des Antriebs ist somit durch Aktivierung der Mittel zum Unterbrechen des Lichtsignals der Lichtschranke die Schneidmaschine außer Betrieb gesetzt. Diese bekannte Schneidmaschine ist aufgrund der beschriebenen Kinematik baulich aufwendig gestaltet und es lässt sich nur durch eine komplexe Bewegung die Lichtschranke unterbrechen.

Aufgabe der vorliegenden Erfindung ist es, eine Schneidmaschine der eingangs genannten Art so weiterzubilden, dass die Mittel zum Unterbrechen des Lichtstrahls der Lichtschranke baulich besonders einfach gestaltet sind und mittels dieser Mittel sich durch eine einfache Bewegung die Lichtschranke unterbrechen lässt.

Gelöst wird die Aufgabe dadurch, dass die Mittel ein in dem Lichtschrankengehäuse schwenkbar gelagertes Abdeckelement aufweisen, das außerhalb des Lichtschrankengehäuses angeordnet ist und in einer ersten Schwenkstellung zwischen den beiden Lichtschrankengehäusen angeordnet ist und hierbei den Lichtstrahl der Lichtschranke unterbricht sowie in einer zweiten Schwenkstellung aus dem Bereich zwischen den beiden Lichtschrankengehäusen herausgeschwenkt ist und hierbei den Lichtstrahl der Lichtschranke nicht unterbricht.

Die Mittel zum Unterbrechen des Lichtstrahls der Lichtschranke bzw. der Lichtstrahlen der diversen Verwendung findenden Lichtschranken zeichnet sich durch eine baulich besonders einfache Gestaltung aus, weil es nur erforderlich ist, das Abdeckelement schwenkbar im Lichtschrankengehäuse zu lagern und dieses Abdeckelement aus dem Weg des Lichtstrahls herauszubewegen bzw. in den Weg des Lichtstrahls hineinzubewegen. Dies ermöglicht es, dass Mittel zum Unterbrechen des Lichtsignals baulich besonders einfach zu gestalten.

Vorzugsweise sind beide Lichtschrankengehäuse so ausgebildet, dass sie die Mittel zum Unterbrechen der Lichtschranke aufnehmen. Insbesondere sind die Lichtschrankengehäuse und die in diesen gelagerten Abdeckung, bezogen auf die entsprechende Stellung der Abdeckelemente, zu einer Mittellängsebene der Schneidmaschine, die senkrecht zur Schneidebene verläuft, symmetrisch aufgebaut.

Das jeweilige Gehäuse weist insbesondere mehrere Lichtschranken auf. Diese dienen dem besonders sicheren Absichern des Bereiches zwischen den beiden Lichtschrankengehäusen.

Eine besonders einfache Handhabung des jeweiligen Abdeckelements ergibt sich, wenn dieses im Bereich eines oberen Endes des Lichtschrankengehäuses in diesem schwenkbar gelagert ist. Das Abdeckelement wird somit von der einen Stellung um die obere Achse in die andere Endstellung verschwenkt.

Es hat sich bei Schneidmaschinen, insbesondere solchen, die als Planschneidmaschine ausgebildet sind, als vorteilhaft erwiesen, wenn das jeweilige Lichtschrankengehäuse eine obere Kontur aufweist, die zur Horizontalen geneigt angeordnet ist. Entsprechend sind die diversen den Lichtschrankengehäusen zugeordneten Lichtschranken nicht horizontal angeordnet, sondern spannen eine Lichtstrahlebene auf, die gleichfalls zur Horizontalen geneigt angeordnet ist, ggf. hierbei geringfügig gebogen ist. Das dem Portalrahmen zugewandte Ende des Lichtschrankengehäuses ist somit auf einem höheren Niveau angeordnet als das dem Portalrahmen abgewandte, freie Ende des Lichtschrankengehäuses. Unter diesem Aspekt wird es als besonders vorteilhaft angesehen, wenn die Schwenkachse des im Lichtschrankengehäuse gelagerten Abdeckelements parallel zur oberen Kontur angeordnet ist.

Das jeweilige Abdeckelement ist vorzugsweise abgewinkelt ausgebildet. Es weist insbesondere zwei Schenkel auf. Diese sind vorzugsweise in einem Winkel von 90° zueinander angeordnet. Unter ergonomischen Aspekten wird es als besonders vorteilhaft angesehen, wenn das jeweilige Abdeckelement in der zweiten Schwenkstellung mit dem schwenkbar im Lichtschrankengehäuse gelagerten Schenkel an der Seite des Lichtschrankengehäuses anliegt, die dem anderen Lichtschrankengehäuse abgewandt ist und der andere Schenkel des Abdeckelements von den Lichtschrankengehäusen weggerichtet ist. In der zweiten Schwenkstellung des Abdeckelements liegt dieses weitgehend mit dem einen Schenkel an dem Lichtschrankengehäuse an und es steht der anderen Schenkel des Abdeckelements, insbesondere im rechten Winkel hierzu weg, vorzugsweise horizontal. In der ersten Schwenkstellung des jeweiligen Abdeckelements unterbricht dieses insbesondere mit dem Schenkel, der mit dem schwenkbar im Lichtschrankengehäuse gelagerten Schenkel verbunden ist, den Lichtstrahl der Lichtschranke bzw. die Lichtstrahlen der Lichtschranken. Es ist hierbei unerheblich, welche genaue Position dieser Schenkel des Abdeckelements bezüglich des Lichtschrankengehäuses einnimmt.

Um mit baulich einfachsten Mitteln eine Endstellung des Abdeckelements in der ersten Schwenkstellung herbeizuführen, ist vorgesehen, dass das jeweilige Abdeckelement in der ersten Schwenkstellung mit dem Schenkel, der schwenkbar mit dem Lichtschrankengehäuse verbunden ist, oben auf dem Lichtschrankengehäuse aufliegt. Das Lichtschrankengehäuse dient somit mit seiner oberen Seite als Anschlag für das Abdeckelement und definiert damit dessen erste Schwenkstellung.

Vorzugsweise besteht das jeweilige Abdeckelement aus Kunststoff. Es ist insbesondere als Kunststoffformteil ausgebildet. Hierdurch lässt sich die erfindungsgemäß bevorzugte Gestaltung des Abdeckelements auf besonders einfache Art und Weise erzeugen.

Weitere Merkmale der Erfindung ergeben sich aus den Unteransprüchen, der nachfolgenden Beschreibung der Zeichnung und der Zeichnung selbst.

Ein bevorzugtes Ausführungsbeispiel der Erfindung ist in der Zeichnung veranschaulicht und in der nachfolgenden Beschreibung erläutert, ohne hierauf beschränkt zu sein.

Es zeigt:
- Fig. 1: in schematischer Darstellung eine Frontansicht einer gemäß der Erfindung gestalteten Schneidmaschine, somit von der Bedienerseite gesehen,
- Fig. 2: eine vergrößerte Darstellung des in Fig. 1 veranschaulichten rechten Lichtschrankengehäuses mit Lichtschranken und Abdeckelement,
- Fig. 3: eine Ansicht der Anordnung gemäß Pfeil III in Fig. 2,
- Fig. 4: eine Ansicht der Anordnung gemäß Pfeil IV in Fig. 2,
- Fig. 5: eine Ansicht der Anordnung gemäß Fig. 2, allerdings veranschaulicht für die die lichtschrankenabdeckende Stellung des Abdeckelements,
- Fig. 6: eine Ansicht gemäß Fig. 3, allerdings für die die lichtschrankenabdeckende Stellung des Abdeckelements.

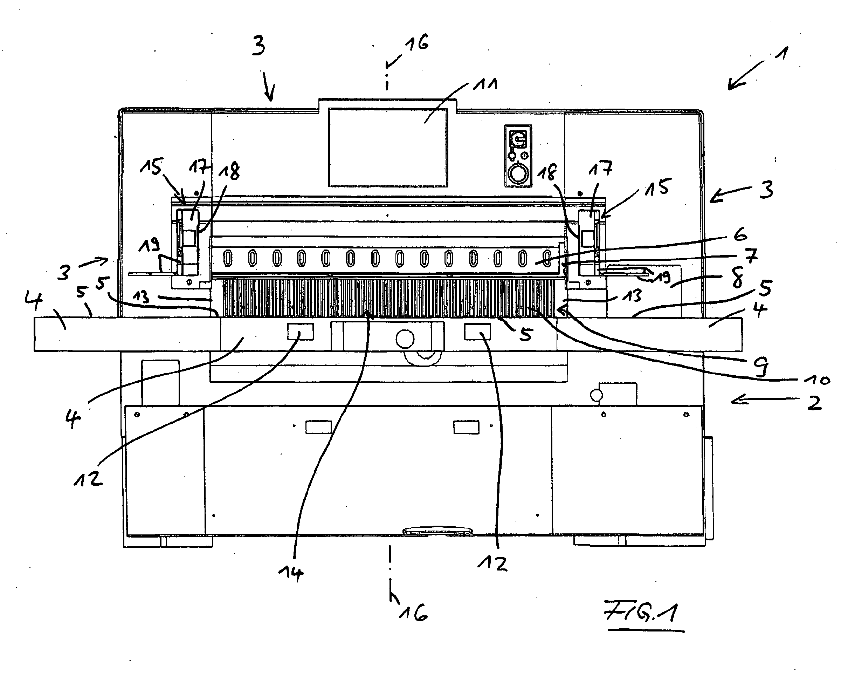

Die in Fig. 1 gezeigte Schneidmaschine 1, die als Planschneidmaschine ausgebildet ist, dient dem Schneiden von gestapeltem, blättrigem Gut, insbesondere solchem aus Papier, Pappe, Folien oder dergleichen. Die Schneidmaschine weist einen Ständer 2 mit oberem Portalrahmen 3 auf, ferner einen Tisch 4. Der Tisch 4 ist mit einer oberen, horizontalen Tischfläche versehen, die der Aufnahme der Stapel dient, sei es Stapel zu schneidenden Guts oder Stapel geschnittenen Guts. Die Tischfläche 5 erstreckt sich somit senkrecht zur Ebene des Zeichnungsblattes. Im Portalrahmen 3 ist ein absenk- und anhebbares Schneidmesser 6 gelagert, hinter dem ein Pressbalken 7 gleichfalls im Portalrahmen 3 heb- und senkbar gelagert ist. Der Pressbalken dient dem Fixieren des zu schneidenden Guts, indem der Pressbalken 7 in abgesenkter Stellung den Schneidgutstapel gegen den Tisch 4 drückt. Das Schneidmesser 6 ist im Schwingschnitt mittels eines Kurbeltriebs aus der in Fig. 1 veranschaulichten oberen Endstellung in eine untere Endstellung verfahrbar, in der es in eine vom Tisch 4 aufgenommene Schneidliste eindringt. Der Pressbalken 7 ist mittels eines Antriebes aus der in Fig. 1 veranschaulichten angehobenen Stellung in die abgesenkte, auf dem Stapel ruhende Position absenkbar. In den angehobenen Positionen von Messer 6 und Pressbalken 7 erstreckt sich der Pressbalken 7 etwas unter das Niveau des Messers 6, sodass die Messerschneide nicht frei liegt. Angetrieben wird das Schneidmesser 6 mittels eines Kurbeltriebes, durch den das Schneidmesser 6 im Schwingschnitt gezogen wird. Der Antriebsmotor für das Schneidmesser 6 ist im rechten Bereich des Portalrahmens 2 angeordnet und durch eine eine Öffnung im Portalrahmen 3 verschließende Klappe 8 zugänglich. Im Bereich des hinteren Tischteils ist eine Vorschubeinrichtung vorgesehen, die einen in bekannter Art und Weise ausgebildeten Vorschubsattel 9 mit vorderem Rechenabschnitt 10 aufweist, der dem Vorschieben des zu schneidenden Stapels in Richtung des Bedieners, senkrecht zur Schneidebene dient. Die dem Bediener zugewandte Seite des Vorschubsattels 9 verläuft parallel zur Schneidebene des Schneidmessers 6. Der Vorschubsattel 10 ist im Bereich des hinteren Tischteils vor- und zurückverfahrbar. Im oberen, horizontal verlaufenden Abschnitt des Portalrahmens 3 ist dieser mit einem Bedien- und Informationsdisplay 11 versehen. Betätigt wird die Schneidmaschine 1 durch Zweihandbetrieb, indem im vorderen Bereich des Tisches 4, in Abstand zueinander, zwei Bedientasten 12 vorgesehen sind. Hierdurch ist grundsätzlich sichergestellt, dass der Bediener, beim Betätigen der Schneidmaschine 1 und damit dem Auslösen des Schnitts, mit seinen Händen nicht in den Bereich des Schneidmessers 6 gelangen kann.
Die Schneidmaschine 1 ist schließlich im Bereich beider Seiten mit Seitenanschlägen 13 zum Positionieren des Schneidguts an dem einen oder anderen Anschlag versehen.

Unterhalb von in angehobenen Stellungen befindlichem Schneidmessers 6 und Pressbalken 7 ist zwischen diesen und der Tischfläche 5 eine Öffnung 14 im Portalrahmen 3 gebildet. Das maximale Maß des zu schneidenden Guts in der Breite und Höhe ist durch diese Öffnung 14 begrenzt.

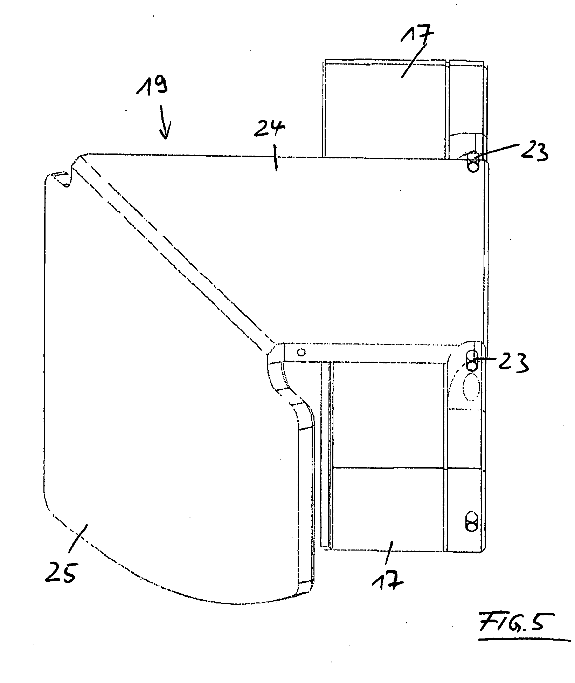

Seitlich des dem Bediener zugewandten Bereiches des Tisches 4, somit seitlich der Öffnung 14 befinden sich Anordnungen 15, die, bei derselben Ausgangsstellung, symmetrisch zu einer mittleren Ebene 16 angeordnet sind, die senkrecht zur Schneidebene, somit senkrecht zum Zeichnungsblatt angeordnet ist. Die jeweilige Anordnung 15 ist im Wesentlichen durch ein Lichtschrankengehäuse 17, von dieser aufgenommene Lichtschranken 18 und ein Abdeckelement 19 gebildet. Die Lichtschranken 18 der beiden Anordnungen 15 dienen dem Absichern des Raumes vor dem Schneidmesser und es lässt sich das jeweilige Abdeckelement 19 aus der in der Fig. 1 veranschaulichten Stellung in eine Endstellung (Fig. 5) bezüglich des zugeordneten Lichtschrankengehäuses 17 verschwenken, in der die Lichtstrahlen bzw. Lichtsignale der Lichtschranken 18 unterbrochen sind. Dies ist insbesondere für die rechts veranschaulichte Anordnung 15 von Bedeutung, wenn nach dem Schwenken des Abdeckelements 19 in die Lichtstrahlen der Lichtschranken die Klappe 8 des Portalrahmens 3 geöffnet wird und Wartungsarbeiten an der Schneidmaschine 1, insbesondere am Antrieb des Schneidmessers 6 vorzunehmen sind.

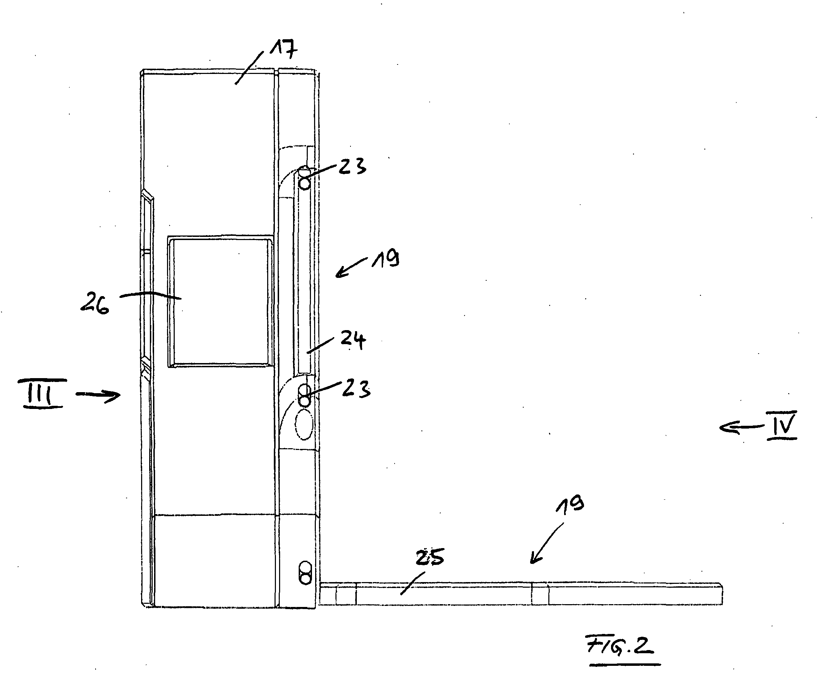

Insofern, und auch wegen der symmetrischen Positionierung der Anordnungen 15 bezüglich der Ebene 16, bei in derselben Stellung befindlichen Abdeckelementen 19, wird bei der nachfolgenden Beschreibung der Fig. 2 bis 6 nur auf die Situation bei der rechten Anordnung 15 gemäß Fig. 1 Bezug genommen. Entsprechendes gilt, spiegelsymmetrisch für die linke Anordnung 15 gemäß Fig. 1.

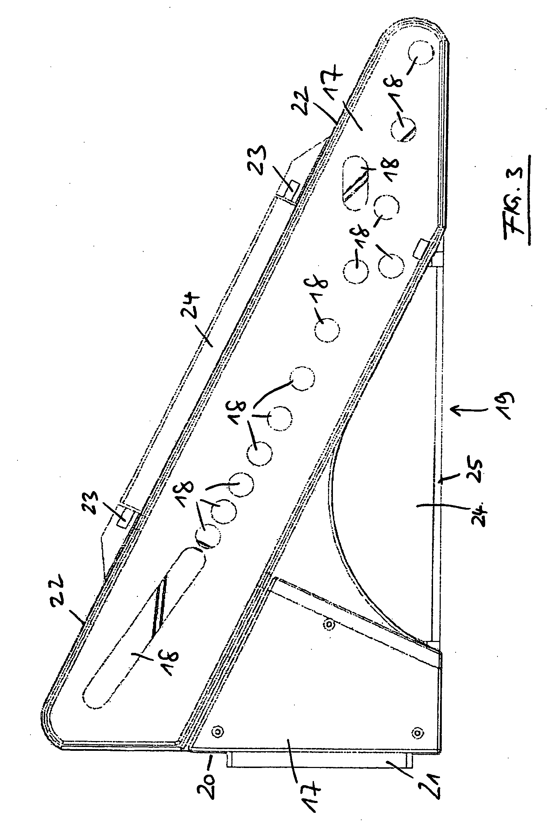

Fig. 3 zeigt die rechte Anordnung 15 von der Seite der linken Anordnung 15 gesehen. Das Lichtschrankengehäuse 17 weist eine im Wesentlichen dreieckige Außenkontur auf, wobei es im Bereich des vertikalen Schenkels 20 des rechtwinkligen Dreiecks einen Ansatz 21 zum Befestigen an der Front des Portalrahmens 3 aufweist. Das Lichtschrankengehäuse 17 weist eine obere Kontur, veranschaulicht durch dessen obere Fläche 22 auf, die zur Horizontalen geneigt angeordnet ist. Das dem Portalrahmen 3 zugewandte Ende des Lichtschrankengehäuses 17 ist auf einem höheren Niveau angeordnet als das dem Portalrahmen 3 abgewandte, freie Ende des Lichtschrankengehäuses 17.

In Abstand zur oberen Fläche 22 sind in die Lichtschrankengehäuse 17 diverse Lichtschranken 18 integriert. Die jeweilige den beiden Lichtschrankengehäusen 17 zugeordnete Lichtschranke 18 weist eine die Funktion eines Senders aufweisende Lichtstrahlenquelle und einen die Funktion eines Empfängers aufweisenden Sensor auf. Die diversen Sender der Lichtschranken 18 senden Lichtsignale aus, die von den diversen Empfängern empfangen werden. Die Lichtschranken 18 der jeweiligen Anordnung 15 sind in etwa in einer Reihe angeordnet, die ungefähr parallel zur schräg angeordneten oberen Fläche 22 verläuft. Die Lichtschranken 18 sind in dem Bereich des Lichtschrankengehäuses 17 platziert, das der Hypotenuse des rechtwinkligen Dreiecks zugeordnet ist.

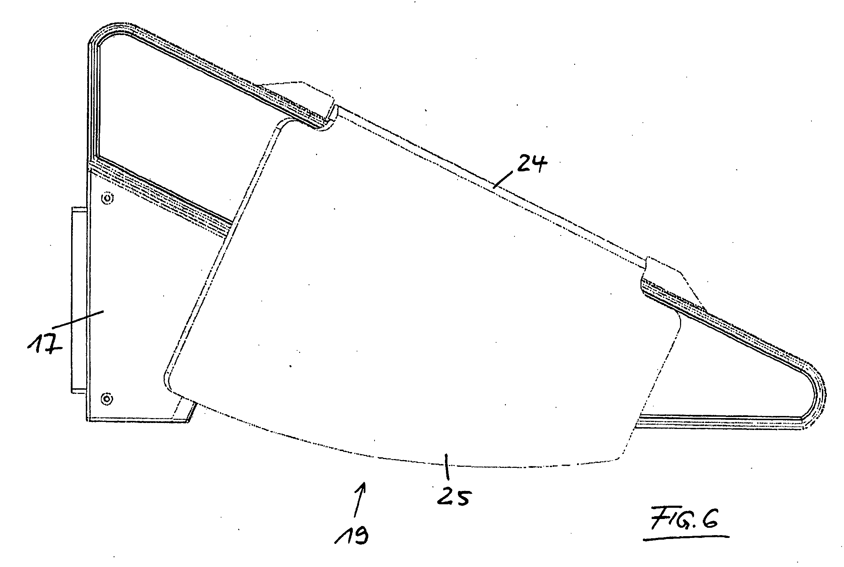

Im jeweiligen Lichtschrankengehäuse 17 sind Mittel zum Unterbrechen der Lichtsignale der Lichtschranken 18 gelagert. Bei diesen Mitteln handelt es sich um das im Lichtschrankengehäuse 17 um eine Achse 23 des Lichtschrankengehäuses 17 schwenkbar gelagerte Abdeckelement 19. Dieses Abdeckelement 19 ist außerhalb des Lichtschrankengehäuses 17 angeordnet. Das Abdeckelement 19 ist in einer ersten Schwenkstellung, die in den Fig. 5 und 6 veranschaulicht ist, zwischen den beiden Lichtschrankengehäusen 17, 17 angeordnet und unterbricht hierbei die Lichtstrahlen der Lichtschranken 18. In einer zweiten Schwenkstellung des Abdeckelements 19, die in den Fig. 2 bis 4 veranschaulicht ist, ist das Abdeckelement 19 aus dem Bereich zwischen den beiden Lichtschrankengehäusen 17 herausbewegt und es unterbricht dabei das Abdeckelement 19 die Lichtstrahlen der Lichtschranken 18 nicht.

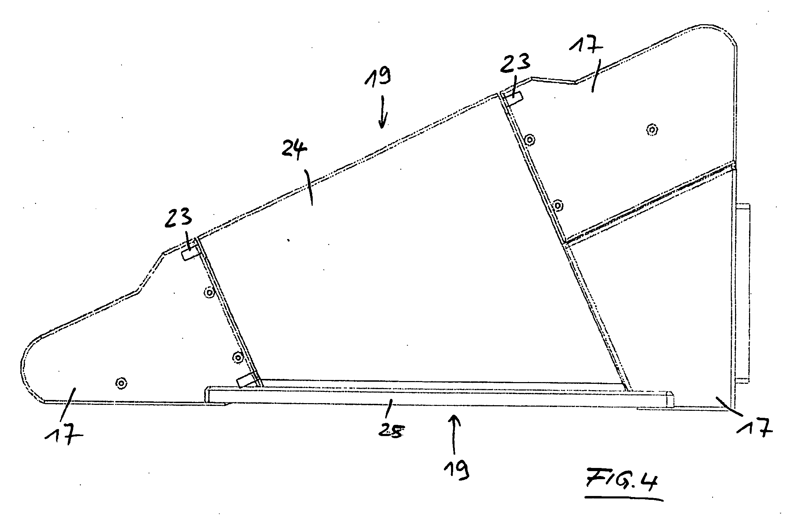

Die Schwenkachse 23 des Abdeckelements 19 ist parallel zur oberen Kontur 22 des Lichtschrankengehäuses 17 angeordnet, im Bereich der oberen Kontur 22. Das Abdeckelement 19 ist abgewinkelt ausgebildet. Es weist zwei Schenkel 24 und 25 auf, die in einem Winkel von 90° zueinander angeordnet sind. Wie insbesondere der Darstellung der Fig. 2 und 4 zu entnehmen ist, liegt das Abdeckelement 19 in der zweiten Schwenkstellung, in der es die Lichtstrahlen der Lichtschranken 18 nicht unterbricht, mit dem schwenkbar im Lichtschrankengehäuse 17 gelagerten Schenkel 24 an der Seite des Lichtschrankengehäuses 17 an, die dem anderen Lichtschrankengehäuse 17 abgewandt ist und es ist der andere Schenkel 25 des Abdeckelements 19 von den beiden Lichtschrankengehäusen 17 weggerichtet. In der ersten Schwenkstellung des Abdeckelements 19 hingegen, wie es der Darstellung der Fig. 4, 5 und 6 zu entnehmen ist, liegt das Abdeckelement 17 mit dem schwenkbar im Lichtschrankengehäuse 17 gelagerten Schenkel 24 oben auf dem Lichtschrankengehäuse 17 im Bereich der Fläche 22 auf und es ist der andere Schenkel 25 nach unten gerichtet, sodass er die Lichtstrahlen der Lichtschranken 18 unterbricht. Um diese Kinematik zu bewerkstelligen und vor dem Hintergrund, dass die Schwenkachse 23 des Abdeckelements 19 zur Horizontalen geneigt angeordnet ist, ist der Schenkel 24 des Abdeckelements 19 nicht rechteckig gestaltet, sondern als unsymmetrisches Viereck, bei dem die der Schwenkachse 23 zugeordnete Seite des Abdeckelements 19 kürzer ausgebildet ist als die gegenüberliegende Verbindungskante der beiden Schenkel 24 und 25, bei sonst paralleler Anordnung der beiden anderen Seiten des Schenkels 24.

Das Abdeckelement 19 besteht aus Kunststoff und ist insbesondere als Kunststoffformteil ausgebildet.

Mit der Bezugsziffer 26 ist ein Display bezeichnet, das im Bereich der oberen Fläche 22 des Lichtschrankengehäuses 17 angeordnet ist und Betriebszustände der Lichtschranken 18 anzeigt.

## Patentansprüche

1. Schneidmaschine (1) zum Schneiden von gestapeltem, blattförmigem Gut, mit einem Tisch (4) zur Aufnahme des Guts, einem oberhalb des Tischs (4) angeordneten Portalrahmen (3), einem im Portalrahmen gelagerten, mittels eines Antriebs heb- und senkbaren Schneidmesser (6), wobei zwischen dem Tisch (4) und dem Portalrahmen (3) eine Öffnung (14) für das Gut gebildet ist, wobei ferner beidseitig der Öffnung (14) Lichtschrankengehäuse (17, 17) zur Aufnahme mindestens einer Lichtschranke (18) angeordnet sind, und die Lichtschrankengehäuse (17, 17) mit dem Portalrahmen (3) verbunden sind, wobei in mindestens einem Lichtschrankengehäuse (17) Mittel zum Unterbrechen eines Lichtstrahls der Lichtschranke (18) gelagert sind, **dadurch gekennzeichnet, dass** die Mittel ein in dem Lichtschrankengehäuse (17) schwenkbar gelagertes Abdeckelement (19) aufweisen, das außerhalb des Lichtschrankengehäuses (17) angeordnet ist und in einer ersten Schwenkstellung zwischen den beiden Lichtschrankengehäusen (17, 17) angeordnet ist und hierbei den Lichtstrahl der Lichtschranke (18) unterbricht, sowie in einer zweiten Schwenkstellung aus dem Bereich zwischen den beiden Lichtschrankengehäusen (17, 17) herausgeschwenkt ist und hierbei den Lichtstrahl der Lichtschranke (18) nicht unterbricht.

2. Schneidmaschine nach Anspruch 1, **dadurch gekennzeichnet, dass** beide Lichtschrankengehäuse (17, 17) die Mittel (19) zum Unterbrechen der Lichtschranke (18) aufweisen.

3. Schneidmaschine nach Anspruch 1 oder 2, **dadurch gekennzeichnet, dass** das jeweilige Lichtschrankengehäuse (17) mehrere Lichtschranken (18) aufnimmt.

4. Schneidmaschine nach einem der Ansprüche 1 bis 3, **dadurch gekennzeichnet, dass** das jeweilige Abdeckelement (19) im Bereich eines oberen Endes (22) des Lichtschrankengehäuses (17) in diesem schwenkbar gelagert ist.

5. Schneidmaschine nach Anspruch 4, **dadurch gekennzeichnet, dass** das jeweilige Lichtschrankengehäuse (17) eine obere Kontur (22) aufweist, die zur Horizontalen geneigt angeordnet ist, wobei das dem Portalrahmen (3) zugewandte Ende des Lichtschrankengehäuses (17) auf einem höheren Niveau angeordnet ist als das dem Portalrahmen (3) abgewandte, freie Ende des Lichtschrankengehäuses (17), wobei die Schwenkachse (23) des im Lichtschrankengehäuse (17) gelagerten Abdeckelements (19) parallel zur oberen Kontur (22) angeordnet ist.

6. Schneidmaschine nach einem der Ansprüche 1 bis 5, **dadurch gekennzeichnet, dass** das jeweilige Abdeckelement (19) abgewinkelt ausgebildet ist, insbesondere zwei Schenkel (24, 25) aufweist, die in einem Winkel von 90° zueinander angeordnet sind.

7. Schneidmaschine nach Anspruch 6, **dadurch gekennzeichnet, dass** das jeweilige Abdeckelement (19) in der zweiten Schwenkstellung mit dem schwenkbar im Lichtschrankengehäuse (17) gelagerten Schenkel (24) an der Seite des Lichtschrankengehäuses (17) anliegt, die dem anderen Lichtschrankengehäuse (17) abgewandt ist und der andere Schenkel (25) des Abdeckelements (19) von den Lichtschrankengehäusen (17) weggerichtet ist.

8. Schneidmaschine nach Anspruch 6 oder 7, **dadurch gekennzeichnet, dass** das jeweilige Abdeckelement (19) in der ersten Schwenkstellung mit dem Schenkel (25), der mit dem schwenkbar im Lichtschrankengehäuse (17) gelagerten Schenkel (24) verbunden ist, den Lichtstrahl der Lichtschranke (18) bzw. die Lichtstrahlen der Lichtschranken (18, 18) unterbricht.

9. Schneidmaschine nach Anspruch 8, **dadurch gekennzeichnet, dass** das jeweilige Abdeckelement (19) in der ersten Schwenkstellung mit dem Schenkel (24), der schwenkbar mit dem Lichtschrankengehäuse (17) verbunden ist, oben auf dem Lichtschrankengehäuse (17) aufliegt.

10. Schneidmaschine nach einem der Ansprüche 1 bis 9, **dadurch gekennzeichnet, dass** das jeweilige Abdeckelement (19) aus Kunststoff besteht, insbesondere als Kunststoffformteil ausgebildet ist.

## Claims

1. Cutting machine (1) for cutting stacked material in sheet form, having a table (4) for receiving the material, a portal frame (3) arranged above the table (4), and a cutting knife (6), which is mounted in the portal frame and can be raised and lowered by means of a drive, wherein an opening (14) for the material is formed between the table (4) and the portal frame (3), wherein furthermore light barrier housings (17, 17) for receiving at least one light barrier (18) are arranged on both sides of the opening (14), and the light barrier housings (17, 17) are connected to the portal frame (3), wherein means for interrupting a light beam of the light barrier (18) are mounted in at least one light barrier housing (17), **characterized in that** the means have a covering element (19), which is pivotably mounted in the light barrier housing (17), is arranged outside the light barrier housing (17) and in a first pivoted position is arranged between the two light barrier housings (17, 17), and in this case interrupts the light beam of the light barrier (18), and in a second pivoted position is pivoted out from the region between the two light barrier housings, (17, 17), and in this case does not interrupt the light beam of the light barrier (18).

2. Cutting machine according to Claim 1, **characterized in that** both light barrier housings (17, 17) have the means (19) for interrupting the light barrier (18).

3. Cutting machine according to Claim 1 or 2, **characterized in that** the respective light barrier housing (17) receives a number of light barriers (18).

4. Cutting machine according to one of Claims 1 to 3, **characterized in that** the respective covering element (19) is mounted in the region of an upper end (22) of the light barrier housing (17) such that it can be pivoted in the latter.

5. Cutting machine according to Claim 4, **characterized in that** the respective light barrier housing (17) has an upper contour (22), which is arranged inclined in relation to the horizontal, wherein the end of the light barrier housing (17) that is facing the portal frame (3) is arranged at a higher level than the free end of the light barrier housing (17) that is facing away from the portal frame (3), wherein the pivoting axis (23) of the covering element (19) mounted in the light barrier housing (17) is arranged parallel to the upper contour (22).

6. Cutting machine according to one of Claims 1 to 5, **characterized in that** the respective covering element (19) is formed in an angled manner, in particular has two legs (24, 25), which are arranged at an angle of 90° in relation to one another.

7. Cutting machine according to Claim 6, **characterized in that**, in the second pivoted position, the respective covering element (19) lies with the leg (24) that is pivotably mounted in the light barrier housing (17) against the side of the light barrier housing (17) that is facing away from the other light barrier housing (17) and the other leg (25) of the covering element (19) is directed away from the light barrier housings (17).

8. Cutting machine according to Claim 6 or 7, **characterized in that**, in the first pivoted position, the respective covering element (19) interrupts the light beam of the light barrier (18) or the light beams of the light barriers (18, 18) with the leg (25), which is connected to the leg (24) that is pivotably mounted in the light barrier housing (17).

9. Cutting machine according to Claim 8, **characterized in that**, in the first pivoted position, the respective covering element (19) lies with the leg (24) that is pivotably connected to the light barrier housing (17) on top of the light barrier housing (17).

10. Cutting machine according to one of Claims 1 to 9, **characterized in that** the respective covering element (19) consists of plastic, in particular is formed as a moulded plastic part.

## Revendications

1. Machine de découpage (1) pour découper des produits empilés en forme de feuilles, comprenant une table (4) pour recevoir les produits, un cadre portique (3) disposé au-dessus de la table (4), une lame de coupe (6) pouvant être levée et abaissée au moyen d'un entraînement et supportée dans le cadre portique, une ouverture (14) pour les produits étant formée entre la table (4) et le cadre portique (3), de part et d'autre de l'ouverture (14) étant en outre disposés des boîtiers de barrière lumineuse (17, 17) pour recevoir au moins une barrière lumineuse (18), et les boîtiers de barrière lumineuse (17, 17) étant connectés au cadre portique (3), des moyens pour interrompre un faisceau lumineux de la barrière lumineuse (18) étant supportés dans au moins un boîtier de barrière lumineuse (17), **caractérisée en ce que** les moyens présentent un élément de recouvrement (19) supporté de manière pivotante dans le boîtier de barrière lumineuse (17), lequel est disposé à l'extérieur du boîtier de barrière lumineuse (17) et est disposé dans une première position de pivotement entre les deux boîtiers de barrière lumineuse (17, 17) et interrompt dans ce cas le faisceau lumineux de la barrière lumineuse (18), et, dans une deuxième position de pivotement, est pivoté hors de la région entre les deux boîtiers de barrière lumineuse (17, 17) et n'interrompt pas dans ce cas le faisceau lumineux de la barrière lumineuse (18).

2. Machine de découpage selon la revendication 1, **caractérisée en ce que** les deux boîtiers de barrière lumineuse (17, 17) présentent les moyens (19) pour interrompre la barrière lumineuse (18).

3. Machine de découpage selon la revendication 1 ou 2, **caractérisée en ce que** le boîtier de barrière lumineuse respectif (17) reçoit plusieurs barrières lumineuses (18).

4. Machine de découpage selon l'une quelconque des revendications 1 à 3, **caractérisée en ce que** l'élément de recouvrement respectif (19) est monté dans la région d'une extrémité supérieure (22) du boîtier de barrière lumineuse (17) de manière à pouvoir pivoter dans celui-ci.

5. Machine de découpage selon la revendication 4, **caractérisée en ce que** le boîtier de barrière lumineuse respectif (17) présente un contour supérieur (22) qui est disposé de manière inclinée par rapport à l'horizontale, l'extrémité du boîtier de barrière lumineuse (17) tournée vers le cadre portique (3) étant disposée à un niveau plus élevé que l'extrémité libre du boîtier de barrière lumineuse (17) opposée au cadre portique (3), l'axe de pivotement (23) de l'élément de recouvrement (19) supporté dans le boîtier de barrière lumineuse (17) étant disposé parallèlement au contour supérieur (22).

6. Machine de découpage selon l'une quelconque des revendications 1 à 5, **caractérisée en ce que** l'élément de recouvrement respectif (19) est réalisé sous forme coudée, en particulier présente deux branches (24, 25) qui sont disposées suivant un angle de 90° l'une par rapport à l'autre.

7. Machine de découpage selon la revendication 6, **caractérisée en ce que** l'élément de recouvrement respectif (19), dans la deuxième position de pivotement avec la branche (24) supportée de manière pivotante dans le boîtier de barrière lumineuse (17), s'applique contre le côté du boîtier de barrière lumineuse (17) qui est opposé à l'autre boîtier de barrière lumineuse (17) et l'autre branche (25) de l'élément de recouvrement (19) est orientée à l'opposé des boîtiers de barrière lumineuse (17).

8. Machine de découpage selon la revendication 6 ou 7, **caractérisée en ce que** l'élément de recouvrement respectif (19) interrompt dans la première position de pivotement, avec la branche (25) qui est connectée à la branche (24) supportée de manière pivotante dans le boîtier de barrière lumineuse (17), le faisceau lumineux de la barrière lumineuse (18) ou les faisceaux lumineux des barrières lumineuses (18, 18).

9. Machine de découpage selon la revendication 8, **caractérisée en ce que** l'élément de recouvrement respectif (19), dans la première position de pivotement avec la branche (24) qui est connectée de manière pivotante au boîtier de barrière lumineuse (17), s'applique par le haut sur le boîtier de barrière lumineuse (17).

10. Machine de découpage selon l'une quelconque des revendications 1 à 9, **caractérisée en ce que** l'élément de recouvrement respectif (19) se compose de plastique, notamment est réalisé sous forme de pièce moulée en plastique.
